# EUROPÄISCHE PATENTSCHRIFT

(11) **EP 3 382 482 B1**
(45) Veröffentlichungstag und Bekanntmachung des Hinweises auf die Patenterteilung: **24.07.2019**
(21) Anmeldenummer: 18158933.4
(22) Anmeldetag: 27.02.2018
(51) Int. Cl.: G05B 19/418, B65G 43/00

(54) **VORRICHTUNG UND VERFAHREN ZUM POSITIONIEREN VON OBJEKTEN**
DEVICE AND METHOD FOR POSITIONING OBJECTS
DISPOSITIF ET PROCÉDÉ DESTINÉS AU POSITIONNEMENT D'OBJETS

(30) Priorität: 27.03.2017 DE 102017106533
(43) Veröffentlichungstag der Anmeldung: 03.10.2018
(73) Patentinhaber: SICK AG, 79183 Waldkirch/Breisgau (DE)
(72) Erfinder: KORNER, Dieter, 86836 Graben (DE); HIRT, Günter, 77790 Steinach (DE)
(74) Vertreter: Manitz Finsterwald Patent- und Rechtsanwaltspartnerschaft mbB

(56) Entgegenhaltungen:
- EP-A1- 2 048 596
- DE-A1-102004 038 135
- US-A- 5 727 132
- US-A1- 2007 073 439

## Beschreibung

Die vorliegende Erfindung betrifft eine Vorrichtung zum Positionieren von Objekten in einer Prozess-Station, mit einem antreibbaren Objektförderer, der dazu ausgebildet ist, die Objekte entlang einer Förderstrecke zu der Prozess-Station zu fördern, und einer Anhaltevorrichtung zum Anhalten der Objekte im Bereich der Prozess-Station.

Derartige Vorrichtungen werden beispielsweise in der Automatisierungs- und Anlagentechnik benötigt. An der Prozess-Station kann zum Beispiel ein Prozess zur Handhabung, Bearbeitung und/oder Inspektion der geförderten Objekte durchgeführt werden. Beispielsweise kann sich ein Bestückungsroboter an der Prozess-Station befinden, der herangeförderte und angehaltene Baugruppen mit weiteren Teilen oder Modulen bestückt. Auch eine Bearbeitung von Werkstücken kann im Bereich der Prozess-Station durchgeführt werden. Ein weiteres Beispiel für einen an der Prozess-Station durchzuführenden Prozess ist eine Inspektion, z. B. mittels eines Bilderfassungssystems oder dergleichen, wobei die Objekte lediglich überprüft oder identifiziert, aber nicht notwendigerweise manipuliert werden. Eine Vorrichtung der genannten Art kann insbesondere in eine sogenannte Indexiereinheit integriert sein. Bei dem Objektförderer kann es sich um einen Bandförderer, einen Riemenförderer, einen Rollenförderer oder dergleichen handeln, der die Objekte direkt oder mittels eines Objektträgers in der gewünschten Förderrichtung transportiert.

Eine hohe Fördergeschwindigkeit ist wünschenswert, um einen hohen Durchsatz der zugehörigen Anlage zu gewährleisten. In der Praxis werden Objektförderer beispielsweise mit einer Fördergeschwindigkeit von 1m/s oder mehr betrieben. Es ist eine Herausforderung, derart schnell bewegte Objekte kontrolliert bis zum Stillstand abzubremsen. Das Anhalten eines Objekts kann mit einem mechanischen Stopper bewerkstelligt werden, der ein ausfahrbares Anschlagelement aufweist. Beispielsweise können die Objekte gegen eine hydraulisch oder pneumatisch ausgefahrene Anschlagplatte eines Stoppers stoßen.

Das Anschlagen am Stopper ist mit einer hohen mechanischen Belastung der Objekte und außerdem mit einer Lärmbelästigung verbunden. Zudem kann bei einem längeren Betrieb der Verschleiß am Stopper und am Objekt oder am Objektträger beträchtlich sein. Ferner kann es infolge des Aufpralls zu einem Zurückprellen der Objekte oder der Objektträger kommen, wodurch eine zeitaufwendige Nachpositionierung erforderlich wird. Ein weiteres Problem bei der Verwendung von Stoppern besteht darin, dass die Halteposition nach der Inbetriebnahme nur mit großem Aufwand verändert werden kann. Beim Einsatz von pneumatischen oder hydraulischen Stoppern ergibt sich ein hoher Steuerungsaufwand sowie eine erhebliche Geräuschemission.

Die durch das Anschlagen der Objekte oder der Objektträger am Anschlagelement verursachten Probleme können durch den Einsatz von gedämpften Stoppern abgemildert werden. Gedämpfte Stopper sind jedoch vergleichsweise kostspielig.

Die DE 10 2004 038135 A1 offenbart ein zonengesteuertes Fördersystem für Werkstücke, das eine Kollision der Werkstücke dadurch vermeidet, dass diese angehalten werden, wenn die stromabwärts gelegene Zone nicht frei ist. Um ein Verrutschen der Werkstücke beim abrupten Anhalten zu vermeiden, erfolgt ein allmähliches Reduzieren der Fördergeschwindigkeit.

Es ist eine Aufgabe der Erfindung, eine kostengünstige Möglichkeit anzugeben, beim Anhalten von geförderten Objekten an Prozess-Stationen die mechanische Belastung, die Lärmbelästigung und den Verschleiß zu reduzieren.

Die Lösung der Aufgabe erfolgt durch eine Vorrichtung mit den Merkmalen des Anspruchs 1 und einem Verfahren mit den Merkmalen des Anspruchs 11.

Erfindungsgemäß umfasst die Anhaltevorrichtung eine Sensoranordnung, die für eine Objekterfassung an wenigstens zwei bezüglich der Förderstrecke hintereinander angeordneten Stellen ausgebildet ist, wobei die Anhaltevorrichtung dazu ausgebildet ist, bei oder nach einem Erfassen eines Objekts an der ersten Stelle eine Bremsfahrt eines Antriebs der Vorrichtung auszulösen, um das erfasste Objekt anzuhalten, und die Position des angehaltenen Objekts anhand eines Objekterfassungssignals, das die Erfassung eines Objekts an der zweiten Stelle angibt, zu überprüfen.

Die Erfindung sieht also vor, die Objekte mittels eines Antriebs abzubremsen und dann sensorisch zu überprüfen, ob der Anhaltevorgang in korrekter Weise stattgefunden hat. Der Abstand zwischen den beiden Stellen kann derart gewählt sein, dass ein vergleichsweise sanftes Abbremsen möglich ist. Vorzugsweise ist der Antrieb dazu ausgebildet, die Bremsfahrt mit einem Stillstand des Objekts abzuschließen, sodass sich der Einsatz eines mechanischen Stoppers erübrigt.

Bei den beiden genannten Stellen kann es sich um scharfe Positionen oder um Bereiche mit einer gewissen Ausdehnung handeln. Ferner können die Stellen voneinander beabstandet sein, aneinander angrenzen oder sogar überlappen. Es ist weiterhin darauf hinzuweisen, dass die Stellen nicht notwendigerweise direkt hintereinander angeordnet sein müssen.

Die Anhaltevorrichtung umfasst einen Regler, der das Objekterfassungssignal empfängt und dazu verwendet, die tatsächliche Halteposition einer vorgegebenen Halteposition anzugleichen. Ein solcher Regler sorgt dafür, dass die gewünschte Halteposition dauerhaft eingehalten wird und es allenfalls kurzzeitig und/oder in geringfügigem Ausmaß zu Abweichungen kommt.

Die Anhaltevorrichtung kann dazu ausgebildet sein, in Abhängigkeit von dem Objekterfassungssignal einen die Bremsfahrt des Antriebs beeinflussenden Bremsparameter anzupassen. Das heißt das Abbremsen kann bei Bedarf beeinflusst werden, um die Halteposition zu korrigieren. Das Anpassen des Bremsparameters kann beispielsweise jedes Mal durchgeführt werden, wenn die überprüfte Position des angehaltenen Objekts von einer vorgegebenen Halteposition abweicht. Die vorgegebene Halteposition kann einstellbar sein, sodass sie bei Bedarf auch nach der Installation der Anlage in einfacher Weise angepasst werden kann.

Der Bremsparameter kann eine Verzögerungszeit sein, um die das Auslösen der Bremsfahrt gegenüber dem Erfassen des Objekts an der ersten Stelle verzögert wird. Die Verzögerungszeit kann besonders leicht angepasst werden. Grundsätzlich ist es auch möglich, z. B. die Bremsgeschwindigkeit und/oder die Bremskraft anzupassen.

Die Verzögerungszeit kann verlängert werden, wenn das Objekt nicht weit genug gefördert wird, die tatsächliche Halteposition also vor der vorgegebenen Halteposition liegt. Andererseits kann die Verzögerungszeit verkürzt werden, wenn das Objekt zu weit gefördert wird, die tatsächliche Halteposition also hinter der vorgegebenen Halteposition liegt. Um hierbei zu vermeiden, dass eine Anpassung deswegen nicht möglich ist, weil die dazu eingesetzte Differenz der vorgegebenen und der tatsächlichen Halteposition zu einer negativen Verzögerungszeit führen würde (das heißt, dass die Bremsfahrt eigentlich vor dem ersten Sensor beginnen müsste), kann eine "Mindest-Verzögerungszeit" als Offset vorgegeben sein. Insbesondere kann zu diesem Zweck der erste Sensor weit genug vor der vorgegebenen Halteposition angeordnet sein. Falls ein anderer Bremsparameter als die Verzögerungszeit zwecks Korrektur der tatsächlichen Halteposition zu verändern ist, kann für diesen ebenfalls ein Offset vorgegeben werden.

Der Regler kann einen die Bremsfahrt des Antriebs beeinflussenden Bremsparameter, insbesondere eine Verzögerungszeit, als Stellgröße verwenden.

Gemäß einer speziellen Ausgestaltung ist der Regler ein digitaler Regler und/oder ein Proportional-Integral-Regler (PI-Regler). Dies hat sich in der Praxis als besonders günstig erwiesen.

Der Regler kann in die Sensoranordnung integriert sein. Dies ermöglicht eine besonders einfache Ausführung, die im Prinzip ohne übergeordnete Steuereinrichtung auskommt.

Vorzugsweise gibt das Objekterfassungssignal die tatsächliche Halteposition des angehaltenen Objekts an. Eine Steuereinrichtung der Vorrichtung kann dann eine eventuelle Abweichung der tatsächlichen Halteposition von der vorgegebenen Halteposition feststellen und eine spezifische Korrektur bewirken.

Alternativ kann das Objekterfassungssignal selbst eine Differenz zwischen der tatsächlichen Halteposition und einer vorgegebenen Halteposition angeben. Ein solches differenzielles Positionssignal kann in einfacher Weise als Grundlage für eine automatische Steuerung oder Regelung der Halteposition verwendet werden.

Im einfachsten Fall kann das Objekterfassungssignal ein binäres Schaltsignal sein, welches angibt, ob das angehaltene Objekt die zweite Stelle erreicht hat oder nicht. Wenn das Objekt die zweite Stelle nicht erreicht hat, ist davon auszugehen, dass der Bremsvorgang zu schnell erfolgt. Die Anhaltevorrichtung kann in diesem Fall beispielsweise die Verzögerungszeit verlängern. Wenn das Objekt hingegen die zweite Stelle passiert hat, ist davon auszugehen, dass der Bremsvorgang zu langsam erfolgt. Die Anhaltevorrichtung kann in diesem Fall beispielsweise die Verzögerungszeit verkürzen. Mittels einer Intervallschachtelung kann auf diese Weise eine Regelung der Halteposition bewerkstelligt werden.

Die Sensoranordnung kann zwei separate Sensoren umfassen, wobei einer der Sensoren zur Überwachung der ersten Stelle und der andere Sensor zur Überwachung der zweiten Stelle vorgesehen ist. Dies ermöglicht eine besonders einfache Steuerung. Vorzugsweise ist der zur Überwachung der ersten Stelle vorgesehene Sensor eine Lichtschranke, während der zur Überwachung der zweiten Stelle vorgesehene Sensor ein Zeilensensor ist.

Die Sensoranordnung kann eine Triangulationssensor-Anordnung umfassen, die zur Überwachung der ersten Stelle und der zweiten Stelle vorgesehen ist. Bei der Triangulationssensor-Anordnung kann es sich um zwei Triangulationssensoren handeln, die je nach Anwendung einen gemeinsamen Lichtsender und/oder einen gemeinsamen Lichtempfänger aufweisen können. Zur Überwachung der beiden Stellen können verschiedene Zonen eines Lichtempfängers der Triangulationssensor-Anordnung ausgewertet werden.

Eine spezielle Ausgestaltung der Erfindung sieht vor, dass die Anhaltevorrichtung eine Steuereinrichtung umfasst, die das Objekterfassungssignal empfängt und darauf beruhend eine Korrekturfahrt des Antriebs oder eines weiteren Antriebs zum bedarfsweisen Korrigieren der Halteposition auslöst. Im Rahmen der Korrekturfahrt kann ein Objekt, das nicht exakt an der vorgegebenen Halteposition angehalten wurde, nachpositioniert werden. Bei der Korrekturfahrt könnte es sich jedoch auch um eine Leerfahrt handeln, bei welcher die Halteposition nachgeregelt wird.

Eine weitere Ausführungsform der Erfindung sieht vor, dass die Anhaltevorrichtung dazu ausgebildet ist, das Objekterfassungssignal an eine Objekthandhabungs-Einrichtung, eine Objektbearbeitungs-Einrichtung oder eine Objektinspektions-Einrichtung der Prozess-Station auszugeben. Bei dieser Ausgestaltung ist es nicht notwendig, die tatsächliche Halteposition zu korrigieren oder anzupassen. Vielmehr wird eine etwaige Fehlpositionierung bei der Handhabung, Bearbeitung oder Inspektion berücksichtigt. Dies kann bei bestimmten Anwendungen von Vorteil sein.

Bevorzugt ist der Antrieb dem Objektförderer zugeordnet. Das heißt der ohnehin vorzusehende Förderantrieb wird zum Abbremsen der Objekte genutzt. Dies ermöglicht eine besonders einfache und kostengünstige Konstruktion. Grundsätzlich könnte auch ein separater Bremsantrieb vorgesehen sein, der das Objekt von dem Objektförderer übernimmt und es dann abbremst.

Der Antrieb kann einen Elektromotor umfassen oder als elektromotorischer Linearantrieb ausgeführt sein. Dies ermöglicht eine besonders einfache Ansteuerung.

Ferner ist es bevorzugt, dass die Anhaltevorrichtung ohne Anschlagfläche für die Objekte ausgeführt ist. Mit anderen Worten ist eine erfindungsgemäße Vorrichtung vorzugsweise stopperlos ausgeführt. Dadurch werden die beim Anschlagen der Objekte an der zugehörigen Anschlagfläche verursachten Probleme vermieden.

Die Erfindung betrifft auch ein Verfahren zum Positionieren von Objekten in einer Prozess-Station, bei dem die Objekte entlang einer Förderstrecke zu der Prozess-Station gefördert werden und mittels einer Anhaltevorrichtung im Bereich der Prozess-Station an einer vorgegebenen Halteposition angehalten werden.

Erfindungsgemäß ist vorgesehen, dass ein an einer ersten Stelle ankommendes Objekt mittels einer Sensoranordnung erfasst wird, zum Anhalten des erfassten Objekts eine Bremsfahrt eines Antriebs ausgelöst wird und die Position des angehaltenen Objekts anhand eines von der Sensoranordnung ausgegebenen Objekterfassungssignals, das die Erfassung eines Objekts an einer bezüglich der Förderrichtung nach der ersten Stelle befindlichen zweiten Stelle angibt, überprüft wird. Die erste Stelle kann so weit von der zweiten Stelle oder von einer vorgegebenen Halteposition entfernt angeordnet sein, dass ein vergleichsweise sanftes Abbremsen möglich ist.

Erfindungsgemäß wird ein die Bremsfahrt des Antriebs beeinflussender Bremsparameter in Abhängigkeit von dem Objekterfassungssignal angepasst. Insbesondere kann der Bremsparameter jedes Mal angepasst werden, wenn die überprüfte Position des angehaltenen Objekts von einer vorgegebenen Halteposition abweicht.

Bevorzugt ist vorgesehen, dass das Auslösen der Bremsfahrt gegenüber dem Erfassen des Objekts an der ersten Stelle um eine Verzögerungszeit verzögert wird und die Verzögerungszeit in Abhängigkeit von dem Objekterfassungssignal angepasst wird. Eine solche Regelung kann besonders einfach durchgeführt werden.

Erfindungsgemäß ist vorgesehen, dass die tatsächliche Halteposition mittels einer das Objekterfassungssignal verwendenden Regelung der vorgegebenen Halteposition angeglichen wird. Auf diese Weise ist sichergestellt, dass die Halteposition auch bei länger andauerndem Betrieb eingehalten wird.

Weiterbildungen der Erfindung sind auch in den abhängigen Ansprüchen, der Beschreibung sowie der beigefügten Zeichnung angegeben.

Die Erfindung wird nachfolgend beispielhaft unter Bezugnahme auf die Zeichnungen beschrieben.
- Fig. 1: ist eine vereinfachte Draufsicht auf eine erfindungsgemäße Vorrichtung zum Positionieren von Objekten in einer Prozess-Station.
- Fig. 2: zeigt die Vorrichtung gemäß Fig. 1 von der Seite.
- Fig. 3: zeigt das Zusammenwirken zweier Sensoren, eines Reglers und eines Antriebs der in Fig. 1 dargestellten Vorrichtung in schematischer Form.
- Fig. 4: zeigt eine alternative Ausgestaltung einer erfindungsgemäßen Vorrichtung zum Positionieren von Objekten, welche eine Triangulationssensor-Anordnung mit zwei Lichtsendern aufweist.
- Fig. 5: zeigt eine weitere alternative Ausgestaltung einer erfindungsgemäßen Vorrichtung zum Positionieren von Objekten, welche eine Triangulationssensor-Anordnung mit einem Lichtsender aufweist.

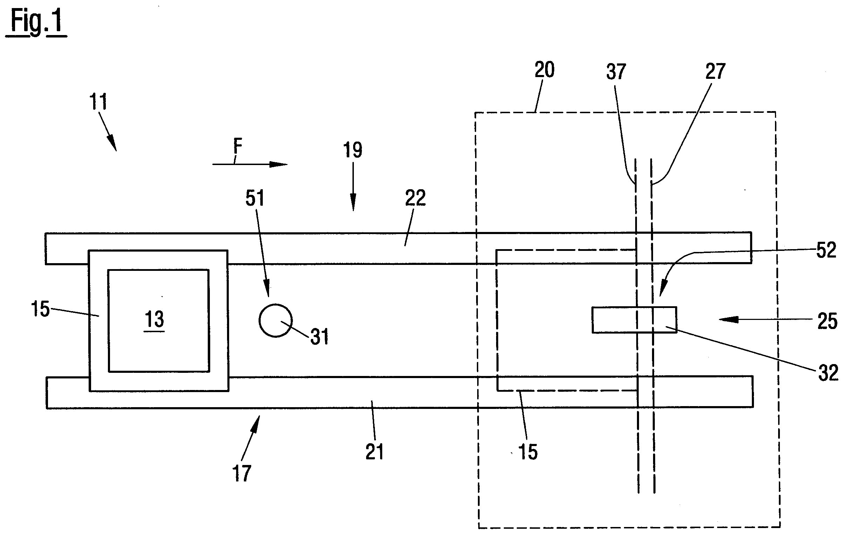

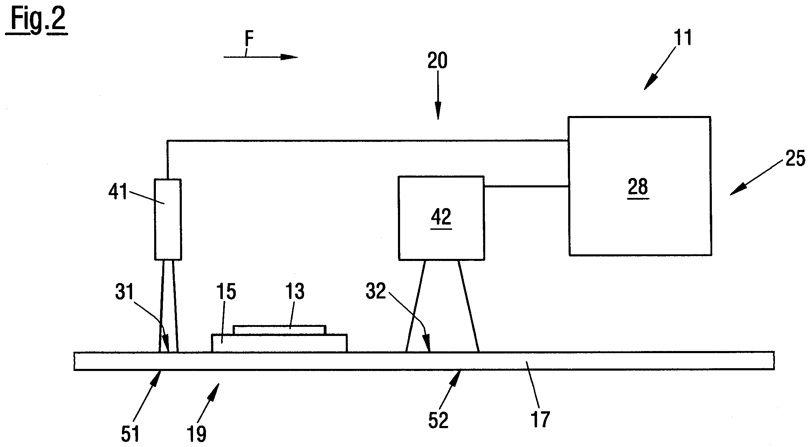

Die in Fig. 1 und 2 gezeigte Vorrichtung 11 dient zum Positionieren von Objekten 13 in einer Prozess-Station 20, wobei jeweils lediglich ein Objekt 13 gezeigt ist. Das Objekt 13, beispielsweise ein zu bearbeitendes Werkstück oder eine zu bestückende Baugruppe, befindet sich bei dem dargestellten Ausführungsbeispiel auf einem plattenförmigen Objektträger 15. Ein antreibbarer Objektförderer 17 der Vorrichtung 11 dient dazu, den Objektträger 15 mit dem aufliegenden Objekt 13 entlang einer Förderstrecke 19 in einer Förderrichtung F zu der Prozess-Station 20 zu fördern. Die Prozess-Station 20 kann eine beliebig gestaltete Objekthandhabungs-Einrichtung, Objektbearbeitungs-Einrichtung oder Objektinspektions-Einrichtung umfassen. Im Folgenden wird der Begriff "Objekt" in dem Sinne verwendet, dass sowohl ein direkt auf dem Objektförderer 17 aufliegendes Objekt 13 als auch eine Einheit aus einem Objektträger 15 und einem darauf befindlichen Objekt 13 gemeint sein kann.

Der dargestellte Objektförderer 17 ist ein Bandförderer mit zwei voneinander beabstandeten und parallel verlaufenden Förderbändern 21, 22 (Fig. 1). Alternativ könnte der Objektförderer 17 auch als Riemenförderer, Kettenförderer, Rollenförderer oder dergleichen ausgeführt sein. Vorzugsweise ist der Objektförderer 17 elektrisch angetrieben.

Die Vorrichtung 11 ist mit einer Anhaltevorrichtung 25 versehen, die dazu dient, das zur Prozess-Station 20 geförderte Objekt 13 an einer vorgegebenen Halteposition 27 anzuhalten. Ein an einer tatsächlichen Halteposition 37 angehaltener Objektträger 15 ist in Fig. 1 gestrichelt dargestellt. Aufgrund unterschiedlicher Einflüsse kann es zu einer Abweichung der tatsächlichen Halteposition 37 von der vorgegebenen Halteposition 27 kommen. In Fig. 1 liegt die tatsächliche Halteposition 37 beispielhaft vor der vorgegebenen Halteposition 27, das heißt bezüglich der Förderrichtung F zurückversetzt.

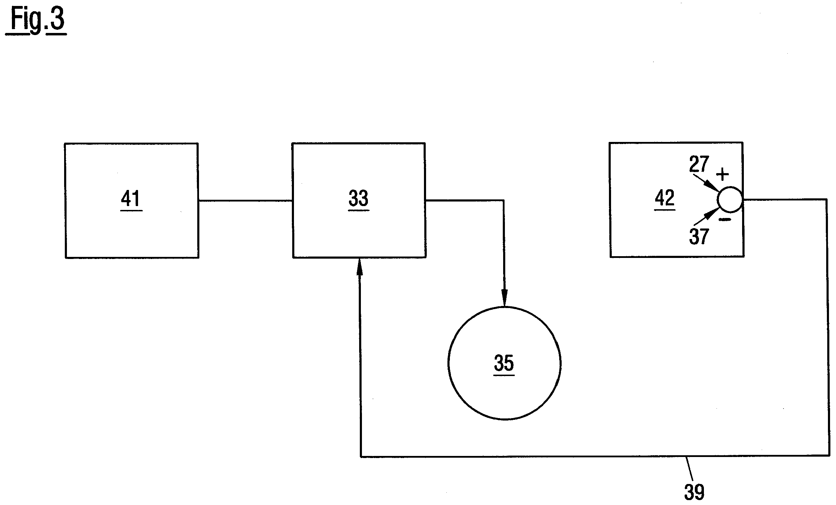

Wie in Fig. 2 zu erkennen ist, umfasst die Anhaltevorrichtung 25 einen ersten Sensor 41 sowie einen zweiten Sensor 42, denen jeweilige Erfassungsbereiche ("Fangbereiche") 31, 32 zugeordnet sind. Bei den Sensoren 41, 42 kann es sich um optoelektronische Objekterkennungssensoren handeln. Vorzugsweise ist der im Bild links befindliche Sensor 41 eine einfache Lichtschranke, während der im Bild rechts befindliche Sensor 42 ein Zeilensensor mit einem ausgedehnten Erfassungsbereich 32 ist. Bezüglich der Förderstrecke 19 sind die Sensoren 41, 42 hintereinander angeordnet, wobei sich der zweite Sensor 42 wie dargestellt im Bereich der Prozess-Station 20 befindet. Der erste Sensor 41 ist in einem vorgegebenen Abstand vor der Prozess-Station 20 angeordnet. Demgemäß ist der erste Sensor 41 in der Lage, ein gefördertes Objekt 13 an einer ersten Stelle 51 der Förderstrecke 19 zu erfassen, wobei die erste Stelle 51 hier dem Erfassungsbereich 31 des ersten Sensors 41 entspricht. Der zweite Sensor 42 ist in der Lage, das geförderte Objekt 13 an einer zweiten Stelle 52 der Förderstrecke 19 zu erfassen, wobei die zweite Stelle 52 hier dem Erfassungsbereich 32 des zweiten Sensors 42 entspricht. Die beiden Sensoren 41, 42 stehen mit einer elektronischen Steuereinrichtung 28 (Fig. 2) in Signalverbindung. Grundsätzlich könnten die beiden Sensoren 41, 42 auch direkt miteinander in Signalverbindung stehen. Wie in Fig. 3 gezeigt steht der erste Sensor 41 mit einem Regler 33 in Verbindung, der wiederum mit einem dem Objektförderer 17 (Fig. 1) zugeordneten Antrieb 35 in Verbindung steht. Der zweite Sensor 42 steht ebenfalls mit dem Regler 33 in Verbindung. Der Regler 33, bei welchem es sich vorzugsweise um einen digitalen PI-Regler handelt, kann in den ersten Sensor 41 oder in den zweiten Sensor 42 integriert sein, um Bauraum zu sparen und die Montage zu erleichtern. Er kann aber auch in die in Fig. 2 gezeigte Steuereinrichtung 28 integriert sein.

Der erste Sensor 41 dient dazu, ein Objekt 13 an der ersten Stelle 51 zu erfassen und nach Ablauf einer vorgegebenen Verzögerungszeit eine Bremsfahrt des Antriebs 35 auszulösen, durch die das Objekt 13 bis zum Stillstand abgebremst wird. Je länger die zwischen dem Erfassen des Objekts 13 und dem Beginn der Bremsfahrt verstreichende Verzögerungszeit gewählt wird, umso weiter bewegt sich das Objekt 13, bevor es zum Stehen kommt. Die Vorgabe einer entsprechenden Verzögerungszeit kann somit dazu dienen, das Objekt 13 an der vorgegebenen Halteposition 27 anzuhalten.

Der zweite Sensor 42 ist dazu ausgebildet, die tatsächliche Halteposition 37 des angehaltenen Objekts 13 zu erfassen und mit der vorgegebenen Halteposition 27 zu vergleichen. Die Differenz zwischen der tatsächlichen Halteposition 37 und der vorgegebenen Halteposition 27 wird als Objekterfassungssignal 39 an den Regler 33 ausgegeben. Der Regler 33 empfängt das Objekterfassungssignal 39 und verwendet es dazu, die tatsächliche Halteposition 37 der vorgegebenen Halteposition 27 anzugleichen. Wenn das Objekterfassungssignal 39 angibt, dass sich die tatsächliche Halteposition 37 bezogen auf die Förderstrecke 19 hinter der vorgegebenen Halteposition 27 befindet, das Objekt 13 also zu weit gefahren ist, sorgt der Regler 33 dafür, dass die Verzögerungszeit verringert wird. Wenn im umgekehrten Fall das Objekterfassungssignal 39 angibt, dass sich die tatsächliche Halteposition 37 bezogen auf die Förderstrecke 19 vor der vorgegebenen Halteposition 27 befindet, das Objekt 13 also nicht weit genug gefahren ist, sorgt der Regler 33 für eine Verlängerung der Verzögerungszeit. Sollte es also aufgrund von Störungen, Ungenauigkeiten und/oder äußeren Einflüssen zu einer Diskrepanz zwischen der tatsächlichen Halteposition 37 und der vorgegebenen Halteposition 27 kommen, so wird diese mittels des Reglers 33 innerhalb kurzer Zeit wieder beseitigt. Auf diese Weise ist eine dauerhafte Einhaltung der vorgegebenen Halteposition 27 gewährleistet.

Es ist bevorzugt, dass zu Beginn des Sensorbetriebs eine "Mindest-Verzögerungszeit" als Offset vorgegeben ist. Dies wird auf einfache Weise realisiert, in dem zum Beispiel der erste Sensor weit genug vor der vorgegebenen Halteposition angeordnet ist. Dadurch ist sichergestellt, dass im Falle eines Haltens des Objekts 13 hinter der vorgegebenen Halteposition 27 (anders als im Beispiel der Fig. 1 dargestellt) eine Rückverlegung der tatsächlichen Halteposition 37 durch entsprechende Verringerung der Verzögerungszeit auf jeden Fall möglich ist. Das heißt, dass die Regelung genügend "Spielraum" zur Verkürzung der Verzögerungszeit hat, auch wenn die notwendige Anpassung größer ist. So kann vermieden werden, dass eine Anpassung deswegen nicht möglich wäre, weil die dazu eingesetzte Differenz der vorgegebenen und der tatsächlichen Halteposition dazu führen würde, dass die Verzögerungszeit negativ würde, also die Bremsfahrt eigentlich schon vor dem ersten Sensor beginnen müsste, wo sie naturgemäß nicht vom ersten Sensor getriggert werden könnte. Falls ein anderer Bremsparameter als die Verzögerungszeit zwecks Korrektur der tatsächlichen Halteposition 37 zu verändern ist, kann für diesen ebenfalls ein Offset vorgegeben werden.

Eine nicht dargestellte Ausführungsform der Erfindung sieht vor, dass eine etwaige Diskrepanz zwischen der tatsächlichen Halteposition 37 und der vorgegebenen Halteposition 27 bei der Handhabung, Bearbeitung oder Inspektion berücksichtigt wird. Eine Regelung des Antriebs 35 ist dann nicht zwingend erforderlich.

Es ist auch möglich, dass der zweite Sensor 42 besonders einfach gestaltet ist und beispielsweise eine Abweichung zwischen der tatsächlichen Halteposition 37 und der vorgegebenen Halteposition 27 lediglich stufenweise ermittelt.

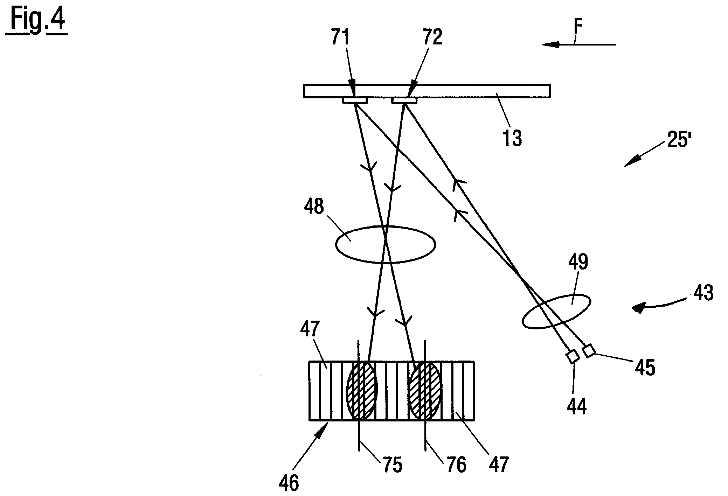

Fig. 4 zeigt eine Ausführungsform der Erfindung, bei der die Anhaltevorrichtung 25' eine Triangulationssensor-Anordnung 43 mit zwei voneinander beabstandeten Lichtsendern 44, 45, einer Sendeoptik 49, einer Empfangsoptik 48 und einem Lichtempfänger 46 aufweist. Der Lichtempfänger 46 ist als Zeilendetektor ausgeführt und weist mehrere nebeneinander angeordnete Empfangselemente 47 auf. Die Lichtsender 44, 45 erzeugen in grundsätzlich bekannter Weise Lichtflecke 71, 72 auf einem Objekt 13. Die Lichtflecke 71, 72 werden von der Empfangsoptik 48 auf den Lichtempfänger 46 abgebildet. Durch eine Veränderung der Tastweite kann der Abstand der Lichtflecke 71, 72 beeinflusst werden. Mittels eines Einlernvorgangs können außerdem virtuelle Trennstege 75, 76 des Lichtempfängers 46 eingestellt werden, welche Schaltpunkte festlegen.

Sobald ein entlang der Förderrichtung F gefördertes Objekt 13 den Lichtstrahl des ersten Lichtsenders 44 erreicht, wird ein erstes Schaltsignal ausgelöst, welches wiederum eine Bremsfahrt des Antriebs 35 auslöst. Bei Erreichen des Lichtstrahls des zweiten Lichtsenders 45 wird ein zweites Schaltsignal ausgelöst. Die Zeitspanne zwischen dem Auslösen des ersten Schaltsignals und dem Auslösen des zweiten Schaltsignals ist ein Maß dafür, wie schnell die Bremsung erfolgt, und somit auch für die tatsächliche Halteposition. Die Bremsfahrt kann somit auf Grundlage der Zeitspanne angepasst werden.

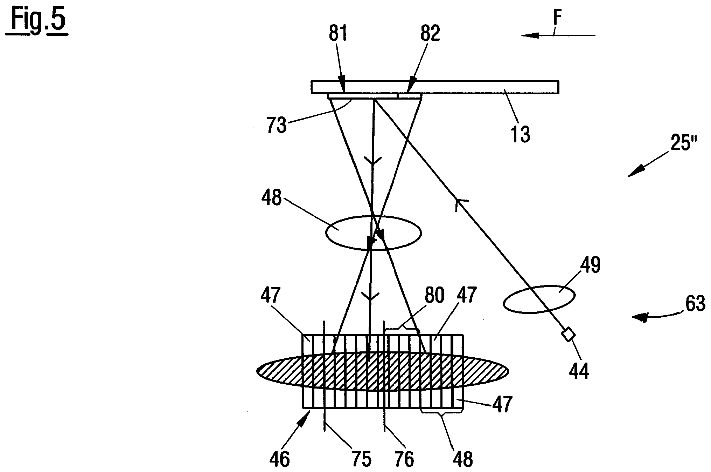

Die in Fig. 5 gezeigte Anhaltevorrichtung 25" ist ähnlich aufgebaut wie die in Fig. 4 dargestellte Ausführungsform und umfasst ebenfalls eine Triangulationssensor-Anordnung 63 mit einem mehrere nebeneinander angeordnete Empfangselemente 47 aufweisenden Lichtempfänger 46. Es ist hier jedoch lediglich ein Lichtsender 44 vorgesehen. Dieser erzeugt aufgrund der Gestaltung der Sendeoptik 49 einen länglichen, beispielsweise linienartigen Lichtfleck 73 auf dem Objekt 13. Alternativ oder zusätzlich zu der Bestimmung von Trennstegen 75, 76 können auf dem Lichtempfänger 46 Zonen 80 definiert werden, die jeweils ein oder mehrere Empfangselemente 47 umfassen und Lichtfleckbereichen 81, 82 des Lichtflecks 73 entsprechen. Die Signale der Zonen 80 können miteinander verrechnet werden.

Sobald ein Objekt 13 den Lichtstrahl des Lichtsenders 44 erreicht, wird ein erstes Schaltsignal ausgelöst und die Bremsfahrt des Antriebs 35 wird gestartet. Die Halteposition kann über die Signalverhältnisse der Zonen 80 ermittelt werden. Es kann auch ein dymanisches Verschieben eines virtuellen Trennstegs 75, 76 stattfinden, um die Halteposition zu ermitteln. Anhand der ermittelten Halteposition kann die Bremsfahrt angepasst werden.

Dadurch dass die Anhaltevorrichtung 25 ohne mechanischen Anschlag arbeitet, sind der Objektträger 15 sowie das Objekt 13 keinen übermäßigen Beschleunigungen ausgesetzt. Die vorgegebene Halteposition 27 kann außerdem in einfacher Weise angepasst werden, beispielsweise zur Taktzeitoptimierung der Vorrichtung 11 oder der übergeordneten Anlage. Ein Verschleiß-Effekt, wie er beim Einsatz von mechanischen Stoppern unweigerlich auftritt, ist nicht vorhanden. Zudem ist weder ein die Taktzeit beeinträchtigendes Nachlaufen des Antriebs 35 noch das Bereitstellen aufwendiger Pneumatik-Komponenten erforderlich.

### Bezuqszeichenliste

- 11: Vorrichtung zum Handhaben von Objekten
- 13: Objekt
- 15: Objektträger
- 17: Objektförderer
- 19: Förderstrecke
- 20: Prozess-Station
- 21, 22: Förderband
- 25, 25', 25": Anhaltevorrichtung
- 27: vorgegebene Halteposition
- 28: elektronische Steuereinrichtung
- 31, 32: Erfassungsbereich
- 33: Regler
- 35: Antrieb
- 37: tatsächliche Halteposition
- 39: Objekterfassungssignal
- 41: erster Sensor
- 42: zweiter Sensor
- 43: Triangulationssensor-Anordnung
- 44, 45: Lichtsender
- 46: Lichtempfänger
- 47: Empfangselement
- 48: Empfangsoptik
- 49: Sendeoptik
- 51: erste Stelle
- 52: zweite Stelle
- 63: Triangulationssensor-Anordnung
- 71, 72: Lichtfleck
- 75, 76: virtueller Trennsteg
- 80: Zone
- 81, 82: Lichtfleckbereich

- F: Förderrichtung

## Patentansprüche

1. Vorrichtung (11) zum Positionieren von Objekten (13) in einer Prozess-Station (20),
mit einem antreibbaren Objektförderer (17), der dazu ausgebildet ist, die Objekte (13) entlang einer Förderstrecke (19) zu der Prozess-Station (20) zu fördern, und
einer Anhaltevorrichtung (25, 25', 25") zum Anhalten der Objekte (13) im Bereich der Prozess-Station (20), wobei
die Anhaltevorrichtung (25, 25', 25") eine Sensoranordnung (41, 42, 43, 63) umfasst, die für eine Objekterfassung an wenigstens zwei bezüglich der Förderstrecke (19) hintereinander angeordneten Stellen (51, 52) ausgebildet ist, und wobei die Anhaltevorrichtung (25, 25', 25") dazu ausgebildet ist,
(i) bei oder nach einem Erfassen eines Objekts (13) an der ersten Stelle (51) eine Bremsfahrt eines Antriebs (35) der Vorrichtung (11) auszulösen, um das erfasste Objekt (13) anzuhalten, und
(ii) die Position des angehaltenen Objekts (13) anhand eines Objekterfassungssignals (39), das die Erfassung eines Objekts (13) an der zweiten Stelle (52) angibt, zu überprüfen,
wobei die Anhaltevorrichtung (25, 25', 25") einen Regler (33) umfasst, der das Objekterfassungssignal (39) empfängt und dazu verwendet, die tatsächliche Halteposition (37) einer vorgegebenen Halteposition (27) anzugleichen.

2. Vorrichtung nach Anspruch 1,
**dadurch gekennzeichnet, dass**
die Anhaltevorrichtung (25, 25', 25") dazu ausgebildet ist, in Abhängigkeit von dem Objekterfassungssignal (39) einen die Bremsfahrt des Antriebs (35) beeinflussenden Bremsparameter, um die das Auslösen der Bremsfahrt gegenüber dem Erfassen des Objekts (13) an der ersten Stelle (51) verzögert wird, anzupassen.

3. Vorrichtung nach einem der vorstehenden Ansprüche, **dadurch gekennzeichnet, dass**
der Regler (33) einen die Bremsfahrt des Antriebs (35) beeinflussenden Bremsparameter als Stellgröße verwendet.

4. Vorrichtung nach einem der vorstehenden Ansprüche, **dadurch gekennzeichnet, dass**
der Regler (33) ein Proportional-Integral-Regler ist.

5. Vorrichtung nach einem der vorstehenden Ansprüche, **dadurch gekennzeichnet, dass**
das Objekterfassungssignal (39) die tatsächliche Halteposition (37) des angehaltenen Objekts (13) angibt, oder
das Objekterfassungssignal (39) eine Differenz zwischen der tatsächlichen Halteposition (37) und einer vorgegebenen Halteposition (27) angibt.

6. Vorrichtung nach einem der Ansprüche 1 bis 4,
**dadurch gekennzeichnet, dass**
das Objekterfassungssignal (39) ein binäres Schaltsignal ist, welches angibt, ob das angehaltene Objekt (13) die zweite Stelle erreicht hat oder nicht.

7. Vorrichtung nach einem der vorstehenden Ansprüche , **dadurch gekennzeichnet, dass**
die Sensoranordnung (41, 42) zwei separate Sensoren umfasst, wobei einer der Sensoren (41) zur Überwachung der ersten Stelle (51) und der andere Sensor (42) zur Überwachung der zweiten Stelle (52) vorgesehen ist, und/oder die Sensoranordnung eine Triangulationssensor-Anordnung (43, 63) umfasst, die zur Überwachung der ersten Stelle (51) und der zweiten Stelle (52) vorgesehen ist.

8. Vorrichtung nach numindoot einem der vorstehenden Ansprüche, dadurch g**ekennzeichnet**, dass
die Anhaltevorrichtung (25, 25', 25") eine Steuereinrichtung (28) umfasst, die das Objekterfassungssignal (39) empfängt und darauf beruhend eine Korrekturfahrt des Antriebs (35) oder eines weiteren Antriebs zum bedarfsweisen Korrigieren der Halteposition auslöst, und/oder die Anhaltevorrichtung (25, 25', 25") dazu ausgebildet ist, das Objekterfassungssignal (39) an eine Objekthandhabungs-Einrichtung, eine Objektbearbeitungs-Einrichtung oder eine Objektinspektions-Einrichtung der Prozess-Station (20) auszugeben.

9. Vorrichtung nach einem der vorstehenden Ansprüche, **dadurch gekennzeichnet, dass**
der Antrieb (35) ein Förderantrieb des Objektförderers (17) ist.

10. Vorrichtung nach numindoot einem der vorstehenden Ansprüche, **dadurch gekennzeichnet, dass**
die Anhaltevorrichtung (25, 25', 25") ohne Anschlagfläche für die Objekte (13) ausgeführt ist.

11. Verfahren zum Positionieren von Objekten (13) in einer Prozess-Station (20),
bei dem die Objekte (13) entlang einer Förderstrecke (19) zu der Prozess-Station (20) gefördert werden und mittels einer Anhaltevorrichtung (25, 25', 25") im Bereich der Prozess-Station (20) angehalten werden, wobei ein an einer ersten Stelle (51) ankommendes Objekt (13) mittels einer Sensoranordnung (41, 42, 43, 63) erfasst wird, zum Anhalten des erfassten Objekts (13) eine Bremsfahrt eines Antriebs (35) ausgelöst wird und die Position des angehaltenen Objekts (13) anhand eines von der Sensoranordnung (41, 42, 43, 63) ausgegebenen Objekterfassungssignals (39), das die Erfassung eines Objekts (13) an einer bezüglich der Förderrichtung (F) nach der ersten Stelle (51) befindlichen zweiten Stelle (52) angibt, überprüft wird, wobei ein die Bremsfahrt des Antriebs (35) beeinflussender Bremsparameter in Abhängigkeit von dem Objekterfassungssignal (39) angepasst wird und die tatsächliche Halteposition (37) mittels einer das Objekterfassungssignal (39) verwendenden Regelung einer vorgegebenen Halteposition (27) angeglichen wird.

12. Verfahren nach Anspruch 11, **dadurch gekennzeichnet, dass**
das Auslösen der Bremsfahrt gegenüber dem Erfassen des Objekts (13) an der ersten Stelle (51) um eine Verzögerungszeit verzögert wird und die Verzögerungszeit in Abhängigkeit von dem Objekterfassungssignal (39) angepasst wird.

## Claims

1. An apparatus (11) for positioning objects (13) in a process station (20), comprising a drivable object conveyor (17) which is configured to convey the objects (13) along a conveying path (19) to the process station (20); and a stopping apparatus (25, 25', 25") for stopping the objects (13) in the region of the process station (20), wherein
the stopping apparatus (25, 25', 25") comprises a sensor arrangement (41, 42, 43, 63) which is configured for an object detection at at least two points (51, 52) which are arranged behind one another with respect to the conveying path (19), and wherein the stopping apparatus (25, 25', 25") is configured
(i) to trigger a braking travel of a drive (35) of the apparatus (11) on or after a detection of an object (13) at the first point (51) to stop the detected object (13) and
(ii) to check the position of the stopped object (13) using an object detection signal (39) which indicates the detection of an object (13) at the second point (52),
wherein the stopping apparatus (25, 25', 25") comprises a regulator (33) which receives the object detection signal (39) and uses it to align the actual stopping position (37) with a predefined stopping position (27).

2. An apparatus in accordance with claim 1,
**characterized in that**
the stopping apparatus (25, 25', 25") is configured to adapt a braking parameter influencing the braking travel of the drive (35) in dependence on the object detection signal (39), by which braking parameter the triggering of the braking travel is delayed with respect to the detection of the object (13) at the first point (51).

3. An apparatus in accordance with one of the preceding claims,
**characterized in that**
the regulator (33) uses a braking parameter influencing the braking travel of the drive (35) as a variable.

4. An apparatus in accordance with any one of the preceding claims,
**characterized in that**
the regulator (33) is a proportional integral regulator.

5. An apparatus in accordance with any one of the preceding claims,
**characterized in that**
the object detection signal (39) indicates the actual stopping position (37) of the stopped object (13); or
**in that** the object detection signal (39) indicates a difference between the actual stopping position (37) and a predefined stopping position (27).

6. An apparatus in accordance with any one of the claims 1 to 4,
**characterized in that**
the object detection signal (39) is a binary switching signal which indicates whether the stopped object (13) has reached the second point or not.

7. An apparatus in accordance with any one of the preceding claims,
**characterized in that**
the sensor arrangement (41, 42) comprises two separate sensors, with one of the sensors (41) being provided for monitoring the first point (51) and the other sensor (42) being provided for monitoring the second point (52); and/or **in that** the sensor arrangement comprises a triangulation sensor arrangement (43, 63) which is provided for monitoring the first point (51) and the second point (52).

8. An apparatus in accordance with any one of the preceding claims,
**characterized in that**
the stopping apparatus (25, 25', 25") comprises a control device (28) which receives the object detection signal (39) and, based thereon, triggers a correction travel of the drive (35) or of a further drive to correct the stopping position as required; and/or
**in that** the stopping apparatus (25, 25', 25") is configured to output the object detection signal (39) to an object handling device, to an object processing device or to an object inspection device of the process station (20).

9. An apparatus in accordance with any one of the preceding claims,
**characterized in that**
the drive (35) is a conveyor drive of the object conveyor (17).

10. An apparatus in accordance with any one of the preceding claims,
**characterized in that**
the stopping apparatus (25, 25', 25") is designed without an abutment surface for the objects (13).

11. A method of positioning objects (13) in a process station (20),
in which the objects (13) are conveyed along a conveying path (19) to the process station (20) and are stopped in the region of the process station (20) by means of a stopping apparatus (25, 25', 25"), wherein
an object (13) arriving at a first point (51) is detected by means of a sensor arrangement (41, 42, 43, 63), a braking travel of a drive (35) is triggered to stop the detected object (13) and the position of the stopped object (13) is checked using an object detection signal (39) which is output by the sensor arrangement (41, 42, 43, 63) and which indicates the detection of an object (13) at a second point (52) which is located after the first point (51) with respect to the conveying direction (F); and
wherein a braking parameter influencing the braking travel of the drive (35) is adapted in dependence on the object detection signal (39) and the actual stopping position (37) is aligned with a predefined stopping position (27) by means of a regulation using the object detection signal (39).

12. A method in accordance with claim 11,
**characterized in that**
the triggering of the braking travel is delayed by a delay time with respect to the detection of the object (13) at the first point (51) and the delay time is adapted in dependence on the object detection signal (39).

## Revendications

1. Dispositif (11) pour positionner des objets (13) dans un poste de traitement (20), comportant
un convoyeur d'objets (17) susceptible d'être entraîné et réalisé pour convoyer les objets (13) le long d'un trajet de convoyage (19) jusqu'au poste de traitement (20), et
un moyen d'arrêt (25, 25', 25") destiné à arrêter les objets (13) au niveau du poste de traitement (20),
dans lequel
le moyen d'arrêt (25, 25', 25") comprend un ensemble capteur (41, 42, 43, 63) qui est réalisé pour détecter des objets à au moins deux emplacements (51, 52) disposés l'un derrière l'autre par rapport au trajet de convoyage (19), et
le moyen d'arrêt (25, 25', 25") est réalisé pour
(i) déclencher un mouvement de freinage d'un entraînement (35) du dispositif (11) pendant ou après la détection d'un objet (13) au premier emplacement (51), afin d'arrêter l'objet détecté (13), et
(ii) vérifier la position de l'objet arrêté (13) à l'aide d'un signal de détection d'objet (39) indiquant la détection d'un objet (13) au deuxième emplacement (52),
le moyen d'arrêt (25, 25', 25") comprend un régulateur (33) qui reçoit le signal de détection d'objet (39) et qui l'utilise pour ajuster la position d'arrêt réelle (37) à une position d'arrêt prédéterminée (27).

2. Dispositif selon la revendication 1,
**caractérisé en ce que**
le moyen d'arrêt (25, 25', 25") est réalisé pour adapter, en fonction du signal de détection d'objet (39), un paramètre de freinage qui influence le mouvement de freinage de l'entraînement (35), à raison duquel le déclenchement du mouvement de freinage est retardé par rapport à la détection de l'objet (13) au premier emplacement (51).

3. Dispositif selon l'une des revendications précédentes,
**caractérisé en ce que**
le régulateur (33) utilise à titre de grandeur de réglage un paramètre de freinage qui influence le mouvement de freinage de l'entraînement (35).

4. Dispositif selon l'une des revendications précédentes,
**caractérisé en ce que**
le régulateur (33) est un régulateur proportionnel-intégral.

5. Dispositif selon l'une des revendications précédentes,
**caractérisé en ce que**
le signal de détection d'objet (39) indique la position d'arrêt réelle (37) de l'objet arrêté (13), ou
le signal de détection d'objet (39) indique une différence entre la position d'arrêt réelle (37) et une position d'arrêt prédéterminée (27).

6. Dispositif selon l'une des revendications 1 à 4,
**caractérisé en ce que**
le signal de détection d'objet (39) est un signal de commutation binaire qui indique si l'objet arrêté (13) a atteint ou n'a pas atteint le second emplacement.

7. Dispositif selon l'une des revendications précédentes,
**caractérisé en ce que**
l'ensemble capteur (41, 42) comprend deux capteurs séparés, l'un des capteurs (41) étant prévu pour surveiller le premier emplacement (51) et l'autre capteur (42) étant prévu pour surveiller le second emplacement (52), et/ou **en ce que** l'ensemble capteur comprend un ensemble capteur de triangulation (43, 63) qui est prévu pour surveiller le premier emplacement (51) et le second emplacement (52).

8. Dispositif selon l'une des revendications précédentes,
**caractérisé en ce que**
le moyen d'arrêt (25, 25', 25") comprend un moyen de commande (28) qui reçoit le signal de détection d'objet (39) et qui déclenche alors un mouvement de correction de l'entraînement (35) ou d'un autre entraînement pour corriger la position d'arrêt en cas de besoin, et/ou
le moyen d'arrêt (25, 25', 25") est réalisé pour émettre le signal de détection d'objet (39) à un moyen de manipulation d'objet, à un moyen de traitement d'objet ou à un moyen d'inspection d'objet du poste de traitement (20).

9. Dispositif selon l'une des revendications précédentes,
**caractérisé en ce que**
l'entraînement (35) est un entraînement de convoyage du convoyeur d'objets (17).

10. Dispositif selon l'une des revendications précédentes,
**caractérisé en ce que**
le moyen d'arrêt (25, 25', 25") est réalisé sans surface de butée pour les objets (13).

11. Procédé pour positionner des objets (13) dans un poste de traitement (20), dans lequel
les objets (13) sont convoyés le long d'un trajet de convoyage (19) jusqu'au poste de traitement (20) et sont arrêtés au niveau du poste de traitement (20) à l'aide d'un moyen d'arrêt (25, 25', 25"),
un objet (13) arrivant à un premier emplacement (51) est détecté à l'aide d'un ensemble capteur (41, 42, 43, 63), un mouvement de freinage d'un entraînement (35) est déclenché pour arrêter l'objet détecté (13) et la position de l'objet arrêté (13) est vérifiée à l'aide d'un signal de détection d'objet (39) émis par l'ensemble capteur (41, 42, 43, 63) et indiquant la détection d'un objet (13) à un second emplacement (52) situé en aval du premier emplacement (51) par rapport à la direction de convoyage (F),
un paramètre de freinage qui influence le mouvement de freinage de l'entraînement (35) est adapté en fonction du signal de détection d'objet (39), et la position d'arrêt réelle (37) est ajustée à une position d'arrêt prédéterminée (27) à l'aide d'une régulation utilisant le signal de détection d'objet (39).

12. Procédé selon la revendication 11,
**caractérisé en ce que**
le déclenchement du mouvement de freinage est retardé d'un temps de retard par rapport à la détection de l'objet (13) au premier emplacement (51), et le temps de retard est adapté en fonction du signal de détection d'objet (39).
